# FASCICULE DE BREVET EUROPEEN

(11) **EP 1 166 048 B1**
(45) Date de publication et mention de la délivrance du brevet: **02.08.2006**
(21) Numéro de dépôt: 00912508.9
(22) Date de dépôt: 25.02.2000
(51) Int. Cl.: G01D 11/24

(54) **PROCEDE POUR L'ASSEMBLAGE D'UN CAPTEUR A EFFET HALL**
VERFAHREN ZUR HERSTELLUNG EINES HALLSENSORS
METHOD FOR ASSEMBLING A HALL EFFECT SENSOR

(30) Priorité: 02.03.1999 FR 9902542
(43) Date de publication de la demande: 02.01.2002
(73) Titulaire: Siemens VDO Automotive S.A.S., 31036 Toulouse Cédex 01 (FR)
(72) Inventeur: MOUAICI, Gérard, F-31500 Toulouse (FR); DORDET, Yves, F-31470 Fonsorbes (FR); COLLET, Michel, F-31200 Toulouse (FR)
(74) Mandataire: Berg, Peter
(86) Numéro de dépôt international: PCT/EP2000/001577
(87) Numéro de publication internationale: WO 2000/052427

(56) Documents cités:
- DE-A- 3 827 937
- DE-C- 19 546 865
- FR-A- 2 748 105
- US-A- 5 121 289

## Description

La présente invention concerne d'une manière générale les capteurs à effet Hall du type de ceux mis en oeuvre, par exemple, en électronique automobile, pour le contrôle d'un quelconque organe tournant.

Un capteur à effet Hall de ce type se trouve notamment décrit dans le brevet français qui, déposé le 5 juillet 1993 sous le No 93 08312, a été publié sous le No 2 707 392.

Il comporte, globalement, dans un corps de capteur, qui, en pratique, est en forme de godet, et qui est destiné à assurer la protection de l'ensemble et sa fixation à un châssis, un support, qui est assez communément appelé "carcasse", et en bout duquel intervient une cellule à effet Hall, avec, portés par ce support, d'une part, un aimant permanent, qui assure la polarisation de la cellule à effet Hall, et, d'autre part, une carte électronique, qui porte les composants nécessaires au fonctionnement de celle-ci.

Corollairement, l'organe tournant dont la position angulaire est à contrôler, ou une roue solidaire en rotation de cet organe tournant, porte un ou plusieurs repères, qui défilent au droit du capteur à effet Hall.

Le champ d'induction, qui, généré par l'aimant permanent du capteur, traverse la cellule à effet Hall de celui-ci, est modifié par la présence, ou l'absence, de tels repères à son droit, au fur et à mesure du défilement de ces repères.

La fréquence du signal de tension recueillie aux bornes de la cellule à effet Hall est ainsi proportionnelle à la vitesse de rotation de l'organe tournant, et il permet donc de connaître cette vitesse, et, d'une manière plus générale, la position angulaire de l'organe tournant à un instant donné.

Pour que ce signal de tension soit fiable et exploitable, il importe, notamment, que, au sein du capteur à effet Hall, la cellule à effet Hall occupe une position bien déterminée et industriellement reproductible.

Dans le brevet français No 93 08312 mentionné ci-dessus, il a été proposé, pour ce faire, parmi d'autres conditions, que, lors de l'assemblage du capteur à effet Hall, qui implique, d'une manière générale, d'une part, de rapporter sur le support, la cellule à effet Hall, l'aimant permanent, et la carte électronique, et, d'autre part, de disposer le support ainsi équipé dans le corps de capteur, il soit fait en sorte que la cellule à effet Hall soit systématiquement appliquée élastiquement contre une paroi interne du corps de capteur, en pratique la paroi de fond de celui-ci.

Cette paroi de fond peut ainsi avantageusement être prise comme surface de référence pour le positionnement de l'ensemble.

En pratique, dans le brevet français No 93 08312, pour l'application élastique de la cellule à effet Hall sur la paroi de fond du corps de capteur, on tire parti de la flexibilité propre du câble électrique auquel est nécessairement raccordé le capteur à effet Hall.

Cette disposition a donné, et peut encore donner, satisfaction.

Mais elle suppose qu'un tronçon du câble électrique soit libre au sein même du corps de capteur, au détriment de l'encombrement de celui-ci.

En outre, il est relativement difficile de maîtriser la flexibilité de ce câble électrique.

Or il importe que la pression suivant laquelle la cellule à effet Hall est appliquée élastiquement à la paroi de fond du corps de capteur soit relativement faible et bien contrôlée.

Il est par ailleurs connu du document US 5 212 289 de réaliser un capteur comportant un circuit électronique flexible. Ce circuit électronique porte les composants électroniques et la cellule à effet Hall et contourne un aimant permanent pour venir placer cette celleule à effet hall devant l'aimant. Cependant le circuit flexible, selon ce document, ne comporte aucun moyen permettant de venir positionnner de manière prédéterminée la cellule à effet Hall dans le godet devant l'aimant. La cellule à effet Hall est simplement repliée devant l'aimant et lorsque le matériau de remplissage est injecté, le positionnement de cette cellule peut en être affecté.
Il est également déjà connu du document DE 38 27 937 d'alimenter une cellule à effet Hall par un câble multiconducteurs flexible. Pour éviter tout déplacement de la cellule à effet Hall le support intégré dans ce capteur emprisonne le câble multiconducteurs et le guide sur tout le trajet qu'il a à parcourir dans le godet. De ce fait des moyens de retenus et de guidage de formes complexes sont nécessaires.
Il est également connu du document DE 195 46 865 un procédé de montage d'un capteur, dans lequel l'aimant permanent est déplaçable par rapport à la cellule à effet Hall. Dans ce document des moyens de positionnement fixe de la cellule à effet Hall par rapport à l'aimant sont prévus. Ceci nécessite là encore l'emploi de supports aux formes complexes.

La présente invention a d'une manière générale pour objet une disposition donnant à cet égard toute satisfaction.

De manière plus précise, elle a tout d'abord pour objet un procédé d'assemblage pour un capteur à effet Hall du genre concerné ; elle a encore pour objet le capteur à effet Hall correspondant.

Suivant l'invention, on choisit comme carte électronique une carte électronique flexible, on dispose la cellule à effet Hall sur cette carte électronique, et on tire parti de la flexibilité de celle-ci pour l'application élastique de la cellule à effet Hall sur la paroi interne concernée du corps de capteur.

Par exemple, suivant une forme particulière, et préférentielle, de réalisation, la carte électronique devant, pour l'essentiel, s'étendre latéralement, le long du support, on choisit pour carte électronique une carte électronique de longueur suffisante pour que, par un coude, elle puisse contourner le support, et on dispose la cellule à effet Hall sur la partie de la carte électronique destinée à venir en regard de l'extrémité du support, en bout de celui-ci.

Quoi qu'il en soit, la pression suivant laquelle la cellule à effet Hall est ainsi appliquée élastiquement, par la carte électronique elle-même, contre la paroi interne concernée du corps de capteur est avantageusement relativement faible, tout en étant suffisante pour assurer le maintien du contact recherché entre cette cellule à effet Hall et cette paroi, et elle peut également avantageusement être relativement bien contrôlée.

Les caractéristiques et avantages de l'invention ressortiront d'ailleurs de la description qui va suivre, à titre d'exemple, en référence aux dessins schématiques annexés sur lesquels :

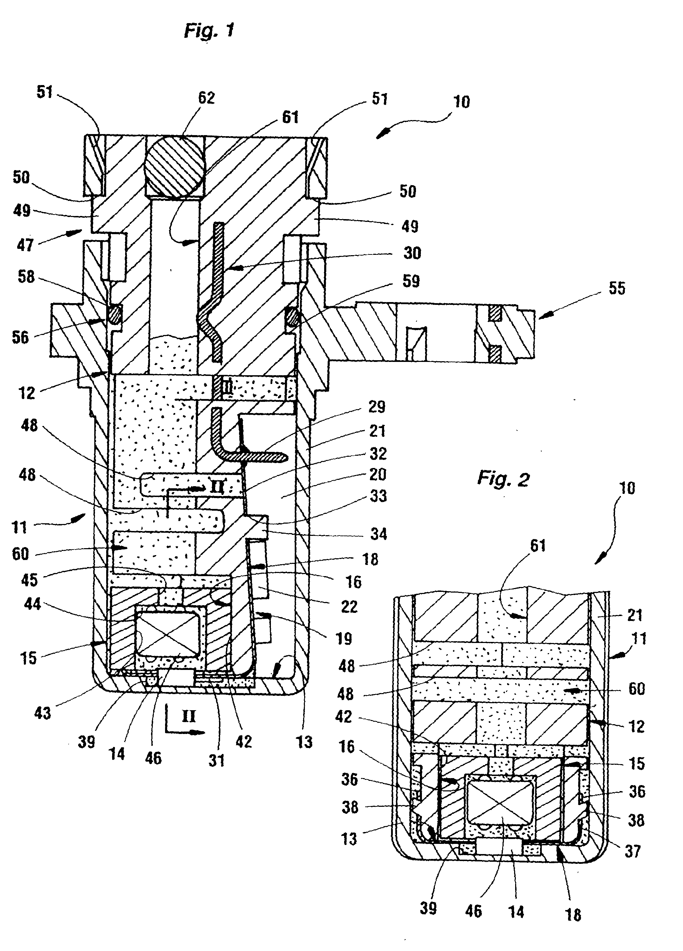

la figure 1 est une vue en coupe axiale d'un capteur à effet Hall suivant l'invention ;
la figure 2 en est une autre vue partielle en coupe axiale, suivant la ligne II-II de la figure 1 ;
la figure 3 est une vue en perspective du support que comporte ce capteur à effet Hall, représenté équipé, avant sa mise en place dans le corps de capteur correspondant ;
la figure 4 est, à échelle différente, et déployée à plat, une vue partielle en plan de la carte électronique mise en oeuvre dans le capteur à effet Hall suivant l'invention ;
la figure 5 est, déduite de la figure 1, une vue partielle en coupe axiale de ce support, avant cette mise en place ;
la figure 6 est, en correspondance avec la figure 5, une vue partielle en coupe axiale de la partie correspondante du corps de capteur.

Tel qu'illustré sur ces figures, et de manière connue en soi, le capteur à effet Hall 10 suivant l'invention comporte, dans un corps de capteur 11, qui est en pratique en forme de godet, un support 12 en bout duquel intervient, au contact d'une paroi interne du corps de capteur 11, en l'espèce sa paroi de fond 13, une cellule à effet Hall 14, avec, portés par ce support 12, d'une part, un aimant permanent 15, qui, disposé dans un logement 16 prévu pour lui dans ce support 12, assure la polarisation de la cellule à effet Hall 14, et, d'autre part, une carte électronique 18, qui, pour l'essentiel, et suivant des dispositions décrites plus en détail ultérieurement, s'étend latéralement le long du support 12, à la faveur d'un pan coupé 19 de celui-ci ménageant un espace libre 20 entre ce support 12 et la paroi latérale 21 du corps de capteur 11, et qui porte les composants 22 nécessaires au fonctionnement de la cellule à effet Hall 14.

Suivant l'invention, la carte électronique 18 est une carte électronique flexible, qui contourne par un coude 23 le support 12, et qui, par sa partie 24 en regard de l'extrémité libre 25 du support 12, porte la cellule à effet Hall 14.

Par carte électronique flexible, on entend, ici, de manière usuelle, une carte électronique dont le matériau constitutif est suffisamment souple pour lui permettre d'être pliée.

En pratique, une telle carte électronique flexible est également élastique.

Autrement dit, elle peut être pliée sans qu'il en résulte pour elle une quelconque déformation permanente.

Par exemple, le matériau constitutif de la carte électronique 18 flexible ainsi mise en oeuvre est une matière synthétique du type des polyamides ou des polyimides.

Dans la forme de réalisation représentée, la carte électronique 18, et, plus précisément, la partie 24 concernée de celle-ci, comporte, pour recevoir la cellule à effet Hall 14, et ainsi porter cette dernière, un évidement 26 dans lequel cette cellule à effet Hall 14 est au moins en partie engagée.

En pratique, cet évidement 26 résulte d'une simple découpe de la carte électronique 18 au contour de la cellule à effet Hall 14, et, pour son maintien, celle-ci y est engagée à frottement.

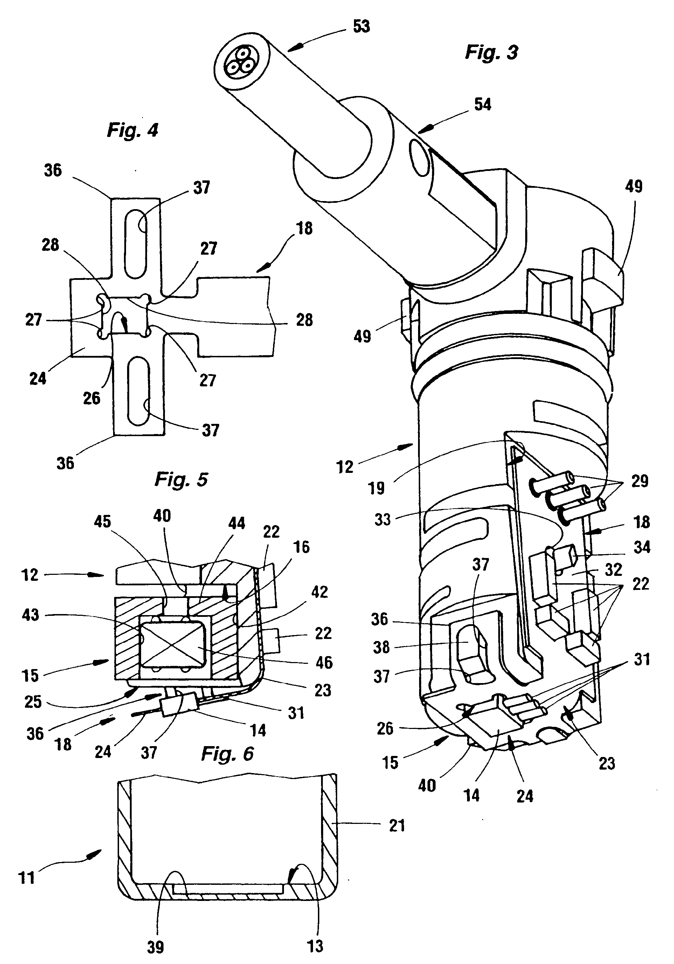

Dans la forme de réalisation représentée, et ainsi qu'il est mieux visible à la figure 4, un lobe 27 intervient à chacun des angles de l'évidement 26 pour que les côtés de celui-ci définissent des languettes 28 aptes à jouer élastiquement, ce qui, d'une part, facilite l'engagement de la cellule à effet Hall 14, et ce qui, d'autre part, est favorable au maintien de celle-ci.

En pratique, la cellule à effet Hall 14 est engagée sensiblement à mi-épaisseur dans l'évidement 26 de la carte électronique 18.

Dans la forme de réalisation représentée, la carte électronique 18 est enfichée sur des broches 29, qui font saillie sur le support 12, et qui, en pratique, appartiennent à une armature 30 sur laquelle ce support 12 est surmoulé.

Par exemple, et tel que représenté, ces broches 29 interviennent sur le pan coupé 19 du support 12, au voisinage de l'extrémité de celui-ci opposée à l'extrémité libre 25 de ce support 12.

Bien entendu, et de manière usuelle, la carte électronique 18 porte un circuit imprimé, dont les pistes relient de manière convenable les broches 29, les composants 22 et la cellule à effet Hall 14, par l'intermédiaire des propres broches 31 de celle-ci, et qui, par mesure de simplicité, n'a pas été représenté sur les figures.

Dans la forme de réalisation représentée, la carte électronique 18 comporte, en pleine surface, dans la partie 32 par laquelle elle est accolée au pan coupé 19 du support 12, au moins un évidement 33 par lequel elle est engagée sur un pion de centrage 34 prévu en saillie à cet effet sur le support 12, et ce pion de centrage 34 a un contour allongé dont la plus grande dimension est supérieure à celle de cet évidement 33.

Par exemple, et tel que représenté, seul un pion de centrage 34 est prévu, à mi-hauteur du pan coupé 19 du support 12, et à mi-distance des bords latéraux de ce pan coupé 1 9.

Par exemple, également, l'évidement 33 de la carte électronique 18 a un contour circulaire, et le pion de centrage 34 du support 12 a un contour en losange, dont la grande diagonale s'étend suivant la hauteur du pan coupé 19 et a une longueur supérieure au diamètre de l'évidement 33 de la carte électronique 18.

Il résulte, ainsi, avantageusement, de ce pion de centrage 34, un alignement de la carte électronique 18 dans la bonne direction, c'est-à-dire suivant la hauteur du pan coupé 19 du support 12.

Dans la forme de réalisation représentée, la carte électronique 18 comporte, enfin, au droit de sa partie 24 portant la cellule à effet Hall 14, au moins un prolongement latéral 36 par lequel elle est attelée avec jeu au support 12.

En pratique, la carte électronique 18 comporte, dos à dos, deux prolongements latéraux 36, et chacun de ceux-ci comporte une boutonnière 37 par laquelle il est crocheté sur un pion 38 prévu à cet effet latéralement en saillie sur le support 12.

Pour l'attelage à jeu recherché, la boutonnière 37 des prolongements latéraux 36 de la carte électronique 18 s'étend transversalement par rapport à la propre direction d'allongement de celle-ci, et elle a une longueur supérieure à la dimension correspondante des pions 38 du support 12.

Dans la forme de réalisation représentée, la paroi de fond 1 3 du corps de capteur 11 comporte, en creux, un dégagement 39 dans lequel la cellule à effet Hall 14 est au moins en partie engagée.

C'est donc, en pratique, au contact du fond de ce dégagement 39 que la cellule à effet Hall 14 se trouve appliquée.

Par ailleurs, dans la forme de réalisation représentée, le logement 16 du support 12 dans lequel se trouve l'aimant permanent 15 débouche à l'extérieur sur l'extrémité libre 25 de ce support 12, et il ouvre donc directement du côté de la cellule à effet Hall 14.

Dans la forme de réalisation représentée, ce logement 16 débouche également latéralement à l'extérieur, par une fente 40.

En pratique, de part et d'autre de la cellule à effet Hall 14, la partie 24 de la carte électronique 18 portant celle-ci est pincée entre, d'une part, le support 12, et, plus précisément, l'extrémité libre 25 de celui-ci, et, d'autre part, la paroi de fond 13 du corps de capteur 11, et, plus précisément, les parties de cette paroi de fond 13 qui encadrent son dégagement 39.

Préférentiellement, et pour des raisons qui apparaîtront ci-après, on fait en sorte que l'aimant permanent 15 soit réglable en position dans le logement 16 prévu pour lui dans le support 12, suivant une direction sensiblement perpendiculaire à la paroi interne concernée du corps de capteur 11, en l'espèce, la paroi de fond 13 de celui-ci.

En pratique, on fait en sorte que, pour ce faire, il soit en prise à frottement avec la paroi latérale 42 de son logement 1 6.

Dans la forme de réalisation représentée, l'aimant permanent 15 comporte un évidement interne 43 ouvert vers la cellule à effet Hall 14.

Par exemple, et tel que représenté, cet aimant permanent 15 a une configuration annulaire à section axiale en U.

Pour des raisons qui apparaîtront ci-après, son fond 44 comporte un perçage 45.

Préférentiellement, et pour des raisons qui apparaîtront également ci-après, il est prévu, dans l'évidement interne 43 de l'aimant permanent 15, un noyau libre 46, qui, en pratique, est magnétiquement neutre.

Dans la forme de réalisation représentée, le support 12 est calé longitudinalement sur le corps de capteur 11 par des moyens d'engagement 47, et, au-delà de ces moyens d'engagement 47 en direction de la paroi de fond 1 3 du corps de capteur 1 1 , il est élastiquement déformable suivant une direction sensiblement perpendiculaire à cette paroi de fond 13.

Par exemple, et tel que représenté, le support 1 2 comporte, pour son élasticité, au moins une saignée 48, qui s'étend sur plus de la moitié de sa largeur, sensiblement parallèlement à la paroi de fond 13 du corps de capteur 11.

Préférentiellement, le support 12 comporte ainsi, à distance l'une de l'autre, au moins deux saignées 48, qui ouvrent latéralement en sens opposés l'une par rapport à l'autre.

En pratique, dans la forme de réalisation représentée, seules deux saignées 48 sont prévues.

Par ailleurs, dans la forme de réalisation représentée, les moyens d'engagement 47 intervenant entre le support 12 et le corps de capteur 11 sont des moyens d'encliquetage.

Par exemple, et tel que représenté, le support 12 présente, en saillie, en positions diamétralement opposées l'un par rapport à l'autre, deux ergots 49, et, par ceux-ci, il est en prise avec deux évidements 50 du corps de capteur 11 précédés chacun par un chanfrein d'engagement 51.

Bien entendu, l'armature 30 sur laquelle est surmoulé le support 12 est électriquement reliée à un câble électrique 53.

Dans la forme de réalisation représentée, le support 12 comporte, d'un seul tenant, un prolongement latéral 54 par lequel il est surmoulé sur ce câble électrique 53.

De son côté, le corps de capteur 11 comporte, lui aussi, un prolongement latéral 55, qui est décalé angulairement par rapport au prolongement latéral 54 du support 12, et qui forme globalement une oreille, pour permettre la fixation de l'ensemble à un quelconque châssis non représenté.

Préférentiellement, entre le support 12 et le corps de capteur 11 interviennent des moyens d'étanchéité 56.

En pratique, ces moyens d'étanchéité 56 sont établis au-delà des moyens d'engagement 47 en direction de la paroi de fond 13 du corps de capteur 11 et ils comportent, par exemple, un joint d'étanchéité annulaire 58 logé dans une rainure 59 du support 12.

Préférentiellement, également, la partie, au moins, du corps de capteur 11 dans laquelle intervient la cellule à effet Hall 14 est comblée par une charge d'immobilisation 60.

Le support 12 comporte de ce fait un canal 61 propre à l'introduction de cette charge d'immobilisation 60.

Par exemple, ce canal 61 est établi sensiblement dans l'alignement du perçage 45 de l'aimant permanent 15.

Quoi qu'il en soit, dans la forme de réalisation représentée, il est obturé, à son débouché, par une bille 62 qui y est engagée à force.

Pour l'assemblage du capteur à effet Hall 10 suivant l'invention, il peut, par exemple, être procédé comme suit.

Dans un premier temps, l'aimant permanent 15 est d'abord mis en place dans le logement 16 prévu pour lui sur le support 1 2, et le noyau libre 46 est introduit dans l'évidement interne 43 de cet aimant permanent 15.

Corollairement, le joint d'étanchéité annulaire 58 est mis en place dans la rainure 59 du support 12.

La carte électronique 18, avec les composants 22 qu'elle porte, est ensuite elle-même rapportée sur le support 12.

En pratique, on choisit pour carte électronique 18 une carte électronique de longueur suffisante pour que, par son coude 23, elle puisse effectivement contourner le support 12, et on dispose la cellule à effet Hall 14 sur la partie 24 de cette carte électronique 18 destinée à venir ainsi en regard de l'extrémité libre 25 du support 12, en bout de celui-ci.

Mais, compte tenu de l'élasticité de la carte électronique 18, cette partie 24 de celle-ci a tendance à s'écarter élastiquement de l'extrémité libre 25 du support 12, figure 5.

C'est la raison pour laquelle il est prévu, suivant l'invention, sur cette carte électronique 18, des prolongements latéraux 36 propres à son attelage au support 12.

En pratique, pour la position d'attente représentée sur la figure 5, et compte tenu du jeu autorisé par les prolongements latéraux 36, la partie 24 de la carte électronique 18 portant la cellule à effet Hall 14 s'étend en oblique par rapport à l'extrémité libre 25 du support 12 à compter de son coude 23.

Dans un deuxième temps, on dispose le support 12 ainsi équipé dans le corps de capteur 11, en l'introduisant dans ce dernier.

Au terme de cette introduction, la cellule à effet Hall 14 vient porter contre la paroi de fond 13 du corps de capteur 11, ou, plus exactement, contre le fond du dégagement 39 de celle-ci, comme précisé ci-dessus.

Ce faisant, le pliage de la carte électronique 18 suivant son coude 23 est accentué, en sorte que la cellule à effet Hall 14 est l'objet de sa part d'une sollicitation élastique qui la maintient appliquée contre la paroi de fond 13 du corps de capteur 11.

Ainsi, suivant l'invention, il est tiré parti de la flexibilité de la carte électronique 18 pour cette application élastique de la cellule à effet Hall 14 sur la paroi interne concernée du corps de capteur 11.

Corollairement, lors de son introduction dans le corps de capteur 11, le support 12 se trouve lui-même légèrement mis sous contrainte, à la faveur de son élasticité propre.

Il reste donc sous contrainte après l'intervention des moyens d'engagement 47 assurant son calage sur le corps de capteur 11, ce qui assure le pincement de la carte électronique 18 entre lui et la paroi de fond 13 de ce dernier.

Il est ensuite procédé au réglage du champ magnétique exercé par l'aimant permanent 15 sur la cellule à effet Hall 14.

Pour ce faire, il est procédé à un réglage en position de cet aimant permanent 15 dans son logement 16.

Par exemple, il est mis en oeuvre, dans ce but, une pige, qui, à la faveur du canal 61 du support 12, permet de refouler plus ou moins l'aimant permanent 15 vers la paroi de fond 13 du corps de capteur 11.

Ainsi qu'il est usuel, ce réglage en position de l'aimant permanent 15 est en pratique réalisé alors que le capteur à effet Hall 10 est sous tension.

Enfin, dans un troisième temps, la charge d'immobilisation 60 est mise en place, à la faveur du canal 61 du support 12, et, après cette mise en place, la bille 62 est engagée à force dans ce canal 61.

Par son élasticité propre, la matière constitutive du support 12 se referme légèrement sur cette bille 62, ce qui assure le maintien de cette dernière.

Préférentiellement, il est fait en sorte que l'espace libre 20 dans lequel interviennent les composants 22 portés par la carte électronique 18 ne soit pas envahi par la charge d'immobilisation 60, pour ménager ces composants 22, et, notamment, leurs connexions.

Ainsi qu'on le comprendra, le noyau libre 46 présent dans l'évidement interne 43 de l'aimant permanent 15 minimise la masse de charge d'immobilisation 60 dans ce dernier, ce qui, au retrait de cette charge d'immobilisation 60, minimise également avantageusement la dépression dont la cellule à effet Hall 14 pourrait être l'objet de sa part.

Bien entendu, la présente invention ne se limite pas à la forme de réalisation et au mode de mise en oeuvre décrits et représentés, mais englobe toute variante d'exécution.

## Revendications

1. Procédé pour l'assemblage d'un capteur à effet Hall, du genre impliquant, d'une part, de rapporter sur un support (12) une cellule à effet Hall l14), un aimant permanent (15) adapté à polariser cette cellule à effet Hall (14), et une carte électronique flexible (18) portant les composants (22) nécessaires à son fonctionnement, et, d'autre part, de disposer le support (12) ainsi équipé dans un corps de capteur (11) en faisant en sorte que la cellule à effet Hall (14) soit appliquée élastiquement contre une paroi interne du corps de capteur (11) et de disposer la cellule à effet Hall (14) sur cette carte électronique (18), **caractérisé en ce que** on tire parti de la flexibilité de celle-ci pour l'application élastique de la cellule à effet Hall (14) sur la paroi interne concernée du corps de capteur (11).

2. Procédé suivant la revendication 1, **caractérisé en ce que** la carte électronique (18) devant, pour l'essentiel, s'étendre latéralement, le long du support (12), on choisit pour carte électronique (18) une carte électronique de longueur suffisante pour que, par un coude (23), elle puisse contourner le support (12), et on dispose la cellule à effet Hall (14) sur la partie (24) de la carte électronique (18) destinée à venir en regard de l'extrémité libre (25) du support (12), en bout de celui-ci.

3. Procédé suivant la revendication 2, **caractérisé en ce qu'**on prévoit, sur la carte électronique (18), au droit de la partie (24) de celle-ci portant la cellule à effet Hall (14), au moins un prolongement latéral (36), pour son attelage à jeu au support (12).

4. Procédé suivant l'une quelconque des revendications 2, 3, **caractérisé en ce qu'**on prévoit, dans la partie (24) de la carte électronique (18) sur laquelle doit être disposée la cellule à effet Hall (14), un évidement (26) propre à recevoir celle-ci.

5. Procédé suivant l'une quelconque des revendications 1 à 4, **caractérisé en ce que**, pour un réglage du champ magnétique exercé par "aimant permanent (15) sur la cellule à effet Hall (14), on fait en sorte que cet aimant permanent (15) soit réglable en position dans le logement (16) prévu pour lui dans le support (12), suivant une direction sensiblement perpendiculaire à la paroi interne concernée du corps de capteur (11).

6. Procédé suivant la revendication 5, **caractérisé en ce qu'**on fait en sorte que l'aimant permanent (15) soit en prise à frottement avec la paroi latérale (42) de son logement (16).

7. Capteur à effet Hall du genre comportant, dans un corps de capteur (11), qui est en forme de godet, un support (12) en bout duquel intervient, au contact de la paroi de fond (13) du corps de capteur (11), une cellule à effet Hall (14), avec, portés par ce support (12), d'une part, un aimant permanent (15), qui, disposé dans un logement (16) prévu pour lui dans ce support (12), assure la polarisation de la cellule à effet Hall (14), et, d'autre part, une carte électronique (18) flexible, qui s'étend latéralement le long du support (12) et le contourne par un coude (23), et qui porte les composants (22) nécessaires au fonctionnement de la cellule à effet Hall (14), **caractérisé en ce que**, en application d'un procédé conforme à l'une quelconque des revendications 1 à 6, la carte électronique (18) applique de manière élastique la cellule à effet Hall (14) sur la paroi interne concernée du corps de capteur (11)
et **en ce que** la carte électronique (18) comporte, au droit d'une partie (24) portant la cellule à effet Hall (14), au moins un prolongement latéral (36) par lequel elle est attelée avec jeu au support (12).

8. Capteur suivant la revendication 7, **caractérisé en ce que** la carte électronique (18) comporte un évidement (26) dans lequel la cellule à effet Hall (14) est au moins en partie engagée.

9. Capteur suivant l'une quelconque des revendications 7, 8, **caractérisé en ce que** le prolongement latéral (36) comporte une boutonnière (37) par laquelle il est crocheté sur un pion (38) prévu à cet effet sur le support (12).

10. Capteur suivant l'une quelconque des revendications 7 à 9, **caractérisé en ce que** la carte électronique (18) comporte, dos à dos, deux prolongements latéraux (36).

11. Capteur suivant l'une quelconque des revendications 7 à 10, **caractérisé en ce que** la carte électronique (18) comporte au moins un évidement (33) par lequel elle est engagée sur un pion de centrage (34) prévu en saillie à cet effet sur le support (12), et ce pion de centrage (34) a un contour allongé dont la plus grande dimension est supérieure à celle de cet évidement (33).

12. Capteur suivant l'une quelconque des revendications 7 à 11, **caractérisé en ce que**, de part et d'autre de la cellule à effet Hall (14), la partie (24) de la carte électronique (18) portant celle-ci est pincée entre le support (12) et la paroi de fond (13) du corps de capteur (11).

13. Capteur suivant l'une quelconque des revendications 7 à 12, **caractérisé en ce que** la paroi de fond (13) du corps de capteur (11) comporte, en creux, un dégagement (39) dans lequel la cellule à effet Hall (14) est au moins en partie engagée.

14. Capteur suivant l'une quelconque des revendications 7 à 13, **caractérisé en ce que** l'aimant permanent (15) est en prise à frottement avec la paroi latérale (42) de son logement (16).

15. Capteur suivant l'une quelconque des revendications 7 à 14, **caractérisé en ce que**, l'aimant permanent (15) comportant un évidement interné (43) ouvert vers la cellule à effet Hall (14), il est prévu, dans cet évidement interne (43), un noyau libre (46), qui est magnétiquement neutre.

16. Capteur suivant l'une quelconque des revendications 7 à 15, **caractérisé en ce que** le support (12) est calé longitudinalement sur le corps de capteur (11) par des moyens d'engagement (47), et, au-delà de ces moyens d'engagement (47) en direction de la paroi de fond (13) du corps de capteur (11), il est élastiquement déformable suivant une direction sensiblement perpendiculaire à cette paroi de fond (13).

17. Capteur suivant la revendication 16, **caractérisé en ce que** le support (12) comporte, pour son élasticité, au moins une saignée (48), qui s'étend sensiblement parallèlement à la paroi de fond (13) du corps de capteur (11).

18. Capteur suivant la revendication 17, **caractérisé en ce que** le support (12) comporte, à distance l'une de l'autre, au moins deux saignées (48), qui ouvrent latéralement en sens opposés l'une par rapport à l'autre.

19. Capteur suivant l'une quelconque des revendications 7 à 18, **caractérisé en ce que** la partie, au moins, du corps de capteur (11) dans laquelle intervient la cellule à effet Hall (14) est comblée par une charge d'immobilisation (60).

20. Capteur suivant la revendication 19, **caractérisé en ce que**, le support (12) comporte un canal (61) propre à l'introduction de la charge d'immobilisation (60), ce canal (61) est obturé, à son débouché, par une bille (62) qui y est engagée à force.

## Claims

1. Method for assembling a Hall-effect sensor, of the type involving on the one hand attaching to a support (12) a Hall-effect cell (14), a permanent magnet (15) suitable for polarising said Hall-effect cell (14) and a flexible circuit board (18) with the components (22) necessary for its operation and on other hand arranging the support (12) thus equipped in a sensor body (11) such that the Hall-effect cell (14) is mounted in an elastic manner against an internal wall of the sensor body (11) and arranging the Hall-effect cell (14) on this circuit board (18), **characterised in that** the latter's flexibility is utilised to mount the Hall-effect cell (14) in an elastic manner on the relevant internal wall of the sensor body (11).

2. Method according to claim 1, **characterised in that**, as the circuit board (18) essentially has to extend laterally along the support (12), the circuit board (18) selected is a circuit board of sufficient length that with the aid of an elbow (23) it can follow the contour of the support (12) and the Hall-effect cell (14) is arranged on the part (24) of the circuit board (18) intended to face the free end (25) of the support (12), at its end.

3. Method according to claim 2, **characterised in that** at least one lateral extension (36) is provided on the circuit board (18) at right angles to the part (24) of the latter holding the Hall-effect cell (14), to couple it loosely to the support (12).

4. Method according to any one of claims 2, 3, **characterised in that** a recess (26) suitable for receiving the Hall-effect cell (14) is provided in the part (24) of the circuit board (18), on which said Hall-effect cell (14) is to be arranged.

5. Method according to any one of claims 1 to 4, **characterised in that**, to regulate the magnetic field exerted by the permanent magnet (15) on the Hall-effect cell (14), it is ensured that the position of the permanent magnet (15) in the housing (16) provided for it in the support (12) can be regulated, in a direction essentially perpendicular to the relevant internal wall of the sensor body (11).

6. Method according to claim 5, **characterised in that** it is ensured that the permanent magnet (15) is subject to friction with the lateral wall (42) of its housing (16).

7. Hall-effect sensor of the type comprising a support (12) in a sensor body (11), being cup-shaped, at the end of which support (12), in contact with the base wall (13) of the sensor body (11), a Hall-effect cell (14) is located with a permanent magnet (15) arranged in a housing (16) provided for it in said support (12) and ensuring the polarisation of the Hall-effect cell (14) and a flexible circuit board (18), which extends laterally along the support (12) and follows its contour by means of an elbow (23) and which has the components (22) necessary for the operation of said Hall-effect cell (14), both being held by said support (12), **characterised in that** on implementation of a method according to any one of claims 1 to 6, the circuit board (18) causes the Hall-effect cell (14) to be mounted in an elastic manner on the relevant internal wall of the sensor body (11) and that the circuit board (18) has at least one lateral extension (36) at right angles to a part (24) holding the Hall-effect cell (14), by means of which lateral extension (36) it is loosely coupled to the support (12).

8. Sensor according to claim 7, **characterised in that** the circuit board (18) has a recess (26), in which the Hall-effect cell (14) is at least partially engaged.

9. Sensor according to any one of claims 7, 8, **characterised in that** the lateral extension (36) has an oblong opening (37) by means of which it hooks onto a pin (38) provided for this purpose on the support (12).

10. Sensor according to any one of claims 7 to 9, **characterised in that** the circuit board (18) has two lateral extensions (36) back to back.

11. Sensor according to any one of claims 7 to 10, **characterised in that** the circuit board has at least one recess (33) by means of which it engages on a centring pin (34) projecting for this purpose from the support (12) and this centring pin (34) has an elongated contour, the longest dimension of which is greater than that of the recess (33).

12. Sensor according to any one of claims 7 to 11, **characterised in that** at one point or another of the Hall-effect cell (14), the part (24) of the circuit board (18) holding it is clamped between the support (12) and the base wall (13) of the sensor body (11).

13. Sensor according to any one of claims 7 to 12, **characterised in that** the base wall (13) of the sensor body (11) has a recessed gap (39) in which the Hall-effect cell (14) is at least partially engaged.

14. Sensor according to any one of claims 7 to 13, **characterised in that** the permanent magnet (15) is subject to friction with the lateral wall (42) of its housing (16).

15. Sensor according to any one of claims 7 to 14, **characterised in that** the permanent magnet (15), having an internal recess (43) opening towards the Hall-effect cell (14), a free core (46), which is magnetically neutral, is provided in this internal recess (43).

16. Sensor according to any one of claims 7 to 15, **characterised in that** the support (12) is fixed longitudinally on the sensor body (11) by holding means (47) and beyond these holding means (47) in the direction of the base wall (13) of the sensor body (11) it can be deformed in an elastic manner in a direction essentially perpendicular to this base wall (13).

17. Sensor according to claim 16, **characterised in that** the support (12) has at least one incision (48) for the purposes of elasticity, extending essentially parallel to the base wall (13) of the sensor body (11).

18. Sensor according to claim 17, **characterised in that** the support (12) comprises at least two incisions (48) at a distance from each other, opening laterally in opposing directions.

19. Sensor according to any one of claims 7 to 18, **characterised in that** the part, at least, of the sensor body (11), in which the Hall-effect cell (14) is located, is subject to an immobilising load (60).

20. Sensor according to claim 19, **characterised in that** the support (12) comprises a channel (61) suitable for the insertion of the immobilising load (60), said channel (61) being blocked at its outlet by a ball (62) which is forced into position.

## Patentansprüche

1. Verfahren zur Herstellung eines Hallsensors, der Art, die einerseits umfasst, auf einer Halterung (12) eine Hallzelle (14), einen Dauermagneten (15), der dafür angepasst ist, die Hallzelle (14) zu polarisieren, und eine flexible elektronische Karte (18) anzubringen, die die Komponenten (22) trägt, die für ihren Betrieb notwendig sind, und andererseits die so ausgestattete Halterung (12) in einem Sensorgehäuse (11) anzuordnen, wobei so vorgegangen wird, dass die Hallzelle (14) federnd an einer inneren Wand des Sensorgehäuses (11) angebracht wird, und die Hallzelle (14) auf der elektronischen Karte (18) anzuordnen, **dadurch gekennzeichnet, dass** die Flexibilität dieser für das elastische Anbringen der Hallzelle (14) auf der betreffenden inneren Wand des Sensorgehäuses (11) ausgenutzt wird.

2. Verfahren nach Anspruch 1, **dadurch gekennzeichnet, dass** als elektronische Karte (18) eine elektronische Karte gewählt wird, die so lang ist, dass sie durch eine Krümmung (23) die Halterung (12) umgehen kann, und die Hallzelle (14) auf dem Teil (24) der elektronischen Karte (18) angeordnet wird, der dazu bestimmt ist, sich entgegen gesetzt von dem freien Ende (25) der Halterung (12) zu befinden, an deren Spitze, wobei die elektronische Karte (18) sich im Wesentlichen seitlich entlang der Halterung (12) erstrecken muss.

3. Verfahren nach Anspruch 2, **dadurch gekennzeichnet, dass** auf der elektronischen Karte (18) rechts von dem Teil (24) dieser, der die Hallzelle (14) trägt, mindestens eine seitliche Verlängerung (36) für die Koppelung mit Spiel an die Halterung (12) vorgesehen ist.

4. Verfahren nach einem der Ansprüche 2, 3, **dadurch gekennzeichnet, dass** in dem Teil (24) der elektronischen Karte (18), auf dem die Hallzelle (14) angeordnet sein muss, eine Ausnehmung (26) vorgesehen ist, die dafür geeignet ist, diese aufzunehmen.

5. Verfahren nach einem der Ansprüche 1 bis 4, **dadurch gekennzeichnet, dass** für ein Einstellen des magnetischen Felds, das durch den Dauermagneten (15) auf die Hallzelle (14) ausgeübt wird, so vorgegangen wird, dass der Dauermagnet (15) in seiner Position verstellbar in der Aufnahme (16) ist, die für ihn in der Halterung (12) vorgesehen ist, in einer Richtung, die im Wesentlichen senkrecht zu der betreffenden inneren Wand des Sensorgehäuses (11) ist.

6. Verfahren nach Anspruch 5, **dadurch gekennzeichnet, dass** so vorgegangen wird, dass der Dauermagnet (15) reibschlüssig mit der seitlichen Wand (42) seiner Aufnahme (16) verbunden ist.

7. Hallsensor des Typs, der in einem Sensorgehäuse (11), das eine Becherform aufweist, eine Halterung (12) umfasst, an deren Spitze in Kontakt mit der unteren Wand (13) des Sensorgehäuses (11) eine Hallzelle (14) wirksam ist, wobei von dieser Halterung einerseits ein Dauermagnet (15) getragen wird, der in einer Aufnahme (16) angeordnet ist, die für ihn in der Halterung (12) vorgesehen ist, und der die Polarisation der Hallzelle (14) sicherstellt, und andererseits eine flexible elektronische Karte (18), die sich seitlich entlang der Halterung (12) erstreckt und sie mit Hilfe einer Krümmung (23) umgeht und die die Komponenten (22) trägt, die für den Betrieb der Hallzelle (14) notwendig sind, **dadurch gekennzeichnet, dass** die elektronische Karte (18) bei der Anwendung eines Verfahrens nach einem der Ansprüche 1 bis 6 die Hallzelle (14) elastisch an der betreffenden inneren Wand des Sensorgehäuses (11) anordnet,
und **dadurch**, dass die elektronische Karte (18) rechts von einem Teil (24), der die Hallzelle (14) trägt, mindestens eine seitliche Verlängerung (36) umfasst, durch die sie mit Spiel an die Halterung (12) gekoppelt ist.

8. Sensor nach Anspruch 7, **dadurch gekennzeichnet, dass** die elektronische Karte (18) eine Ausnehmung (26) umfasst, in die die Hallzelle (14) zumindest teilweise eingesetzt ist.

9. Sensor nach einem der Ansprüche 7, 8, **dadurch gekennzeichnet, dass** die seitliche Verlängerung (36) eine längliche Aussparung (37) umfasst, durch die sie auf einem Fixierelement (38) befestigt ist, das zu diesem Zweck auf der Halterung (12) vorgesehen ist.

10. Sensor nach einem der Ansprüche 7 bis 9, **dadurch gekennzeichnet, dass** die elektronische Karte (18) zwei seitliche Verlängerungen (36) umfasst, die Rücken an Rücken zueinander angeordnet sind.

11. Sensor nach einem der Ansprüche 7 bis 10, **dadurch gekennzeichnet, dass** die elektronische Karte (18) mindestens eine Ausnehmung (33) umfasst, durch die sie auf einem Zentrierelement (34) angebracht ist, das zu diesem Zweck hervorstehend auf der Halterung (12) vorgesehen ist, wobei das Zentrierelement (34) einen länglichen Umriss aufweist, dessen größte Abmessung größer ist als die der Ausnehmung (33).

12. Sensor nach einem der Ansprüche 7 bis 11, **dadurch gekennzeichnet, dass** der Teil (24) der elektronischen Karte (18), der die Hallzelle (14) trägt, von beiden Seiten der Hallzelle (14) zwischen der Halterung (12) und der unteren Wand (13) des Sensorgehäuses (11) eingeklemmt ist.

13. Sensor nach einem der Ansprüche 7 bis 12, **dadurch gekennzeichnet, dass** die untere Wand (13) des Sensorgehäuses (11) in der Vertiefung einen Freiraum (39) umfasst, in den die Hallzelle (14) zumindest zum Teil eingesetzt ist.

14. Sensor nach einem der Ansprüche 7 bis 13, **dadurch gekennzeichnet, dass** der Dauermagnet (15) reibschlüssig mit der seitlichen Wand (42) seiner Aufnahme (16) verbunden ist.

15. Sensor nach einem der Ansprüche 7 bis 14, **dadurch gekennzeichnet, dass** der Dauermagnet (15) eine innere Ausnehmung (43) umfasst, die zu der Hallzelle (14) hin offen ist, wobei in dieser inneren Ausnehmung (43) ein freier Kern (46) vorgesehen ist, der magnetisch neutral ist.

16. Sensor nach einem der Ansprüche 7 bis 15, **dadurch gekennzeichnet, dass** die Halterung (12) längs auf dem Sensorgehäuse (11) durch Mittel zum Eingreifen (47) fest gestellt ist und jenseits dieser Mittel zum Eingreifen (47) in Richtung der unteren Wand (13) des Sensorgehäuses (11) elastisch verformbar ist, in einer Richtung, die im Wesentlichen senkrecht zu dieser unteren Wand (13) ist.

17. Sensor nach Anspruch 16, **dadurch gekennzeichnet, dass** die Halterung (12) für ihre Elastizität mindestens eine Rille (48) umfasst, die sich im Wesentlichen parallel zu der unteren Wand (13) des Sensorgehäuses (11) erstreckt.

18. Sensor nach Anspruch 17, **dadurch gekennzeichnet, dass** die Halterung (12) mindestens zwei voneinander beabstandete Rillen (48) umfasst, die seitlich in einander entgegen gesetzten Richtungen öffnen.

19. Sensor nach einem der Ansprüche 7 bis 18, **dadurch gekennzeichnet, dass** zumindest der Teil des Sensorgehäuses (11), in dem die Hallzelle (14) wirksam ist, mit einer Sperrlast (60) gefüllt ist.

20. Sensor nach Anspruch 19, **dadurch gekennzeichnet, dass** die Halterung (12) einen Kanal (61) umfasst, der für das Einführen der Sperrlast (60) geeignet ist, wobei dieser Kanal (61) an seiner Mündung durch eine Kugel (62) verschlossen ist, die dort mit Kraft eingesetzt wird.
